# EUROPEAN PATENT APPLICATION

(11) **EP 3 790 105 A1**
(43) Date of publication of application: **10.03.2021**
(21) Application number: 20179353.6
(22) Date of filing: 10.06.2020
(51) Int. Cl.: H01M 50/10, H01M 50/147, H01M 50/543

(54) **METAL CAN BATTERY**

(30) Priority: 09.09.2019 US 201962897803 P; 26.05.2020 US 202016883959
(71) Applicant: Apple Inc., Cupertino CA 95014 (US)
(72) Inventor: PELLETIER, David M, Cupertino, CA California 95014 (US); BOOZER, Brad G., Cupertino, CA California 95014 (US); WERNER, Christopher M, Cupertino, CA California 95014 (US); XU, Tianren, Cupertino, CA California 95014 (US); SHIU, Brian K, Cupertino, CA California 95014 (US); SHIWALKAR, Abhishek P, Cupertino, CA California 95014 (US); MISSIRIAN, Simone M, Cupertino, CA California 95014 (US); BALARAM, Haran, Cupertino, CA California 95014 (US); BHARADWAJ, Shravan, Cupertino, CA California 95014 (US); MANOSOV, Alexander, Cupertino, CA California 95014 (US); THEOBALD, Matthew S., Cupertino, CA California 95014 (US); HUANG, Huan, Cupertino, CA California 95014 (US); BUSHNELL, Tyler S., Cupertino, CA California 95014 (US); CHEMELEWSKI, Katherine R., Cupertino, CA California 95014 (US); RAMADASS, Premanand, Cupertino, CA California 95014 (US); SONG, Yanning, Cupertino, CA California 95014 (US); PASMA, Christopher R., Cupertino, CA California 95014 (US)
(74) Representative: Barnfather, Karl Jon

(57) **Abstract**

This application relates to a battery system for reducing spacing between components in an electronic device. The battery system includes a housing surrounding an electrode assembly and a connection module. The housing is rigid or semi-rigid and connected to a common ground. The battery system can be positioned in the electronic device to contact components without damaging the components. In some embodiments, the battery system can be used as a structural element in the electronic component.

## Description

### CROSS-REFERENCE TO RELATED APPLICATION

This application claims the benefit of and priority to U.S. Provisional Application No. 62/897,803 filed on September 9, 2019; and U.S. Patent Application No. 16/883,959 filed on May 26, 2020; each of which is incorporated herein by reference in its entirety and for all purposes.

### FIELD

This disclosure relates generally to the formation and structural features of a rigid or semi-rigid battery housing. More particularly, the present embodiments are directed toward integration of a rigid or semi-rigid battery with other operational components of an electronic device.

### BACKGROUND

Lithium-polymer batteries are commonly used as rechargeable batteries to provide power to a variety of electronic devices, including laptop computers, tablet computers, mobile phones, personal digital assistants (PDAs), digital music players and cordless power tools. Lithium-polymer batteries can often include electrodes and electrolyte sealed in an aluminized laminated pouch. These pouch batteries can be used in space-constrained portable electronic devices such as mobile phones, laptop computer, and/or wearable devices.

The sealed edges of the pouch battery can result in excess pouch material and the pouch can have a positive voltage that requires the exterior surface of the pouch to be isolated from conductive surfaces in the electronic device. To accommodate the excess pouch material and isolate the conductive surface of the pouch battery, the pouch battery needs to be smaller than the area provided in the electronic device, resulting in wasted space. This is especially important in space-constrained portable electronic devices, where space is at a premium and the devices are commonly designed to accommodate the largest batteries possible.

### SUMMARY

This disclosure describes various embodiments that relate to an improved battery for reducing space between the battery and electronic components in an electronic device. In some embodiments, a battery can include a rigid or semi-rigid housing contacting components in an electronic device. For example, in some embodiments the battery includes an electrode and cathode surrounded by a metal housing. The battery can be sized to optimize the available space in the electronic device without the need for spacing between the battery housing and other components in the electronic device. In some embodiments, the metal housing can be connected to a common ground, to allow other components to contact the battery housing without causing a short circuit or corroding the components. Additionally, the metal housing can be used as a structural element in the electronic device. For example, brackets can be attached to the metal housing or a flange between two housing pieces can be using as an attachment point.

Various embodiments of the invention pertain to a rigid or semi-rigid batteries for use in an electronic device. The battery can include electrodes and an electrolyte surrounded by an enclosure. In some embodiments, the electrodes can be rolled or stacked.

A battery system for use in an electronic device is disclosed and includes the following: an electrically conductive housing including a first portion having a flange around its periphery and a second portion that overlaps with the first portion and is hermetically sealed to the first portion at the flange, the first and second portions combining to define an interior cavity; an electrode assembly disposed within the interior cavity and including an anode, a cathode, and a separator between the anode and cathode; and a connection terminal electrically coupled to the electrode assembly through an opening in the housing.

A battery system is disclosed and includes the following: an electrically conductive housing having a base portion and a lid that cooperate to define a hermetically sealed interior cavity, the base portion including a bottom wall and a sidewall extending upward and away from the bottom wall to form a flange around a periphery of the housing, wherein the lid overlaps with a portion of the sidewall to form a flange and the sidewall contains an opening for selectively hermetically sealing the housing; an electrode assembly disposed within the interior cavity and including one or more anode layers, one or more cathode layers, and a separation layer between each of the anode and cathode layers, wherein the electrode assembly is electronically coupled with the housing to form a common ground; electrolyte disposed within the housing around the electrode assembly; a connection terminal electrically coupled to the electrode assembly and extending through the opening in the sidewall of the housing; and an electrically insulative spacer extending circumferentially around the connection terminal to electrically isolate the connection terminal from the housing.

A portable electronic device is disclosed and includes the following: a display; a processor; a memory; and a battery system for providing power to the display, the processor, and the memory, the battery system comprising: an electrode assembly including an anode, a cathode, and a separator; a housing defining a hermetically sealed cavity enclosing the electrode assembly; and a connection module electrically coupling the electrode assembly to the display, the processor, and the memory, a portion of the connection module extending through a sidewall of the housing to electrically couple with the electrode assembly.

To better understand the nature and advantages of the present invention, reference should be made to the following description and the accompanying figures. It is to be understood, however, that each of the figures is provided for the purpose of illustration only and is not intended as a definition of the limits of the scope of the present invention. Also, as a general rule, and unless it is evident to the contrary from the description, where elements in different figures use identical reference numbers, the elements are generally either identical or at least similar in function or purpose.

### BRIEF DESCRIPTION OF THE DRAWINGS

A further understanding of the nature and advantages of the disclosed embodiments can be realized by reference to the remaining portions of the specification and the drawings.
FIG. 1 is a simplified illustration of a previously known pouch battery;
FIG. 2 is a simplified illustration of a battery system according to some embodiments of the present invention;
FIG. 3 is an illustration of an exploded view of a battery system including a housing, rolled electrodes, and a connection module according to some embodiments of the present invention;
FIG. 4 is a cross-sectional, partial top view of a housing and module terminal that can be incorporated into the battery system of FIG. 3 according to some embodiments of the present invention;
FIGS. 5A and 5B are cross sections of a housing and rolled electrodes that can be incorporated into the battery system of FIG. 3 according to some embodiments of the present invention;
FIGS. 6A - 6H are side views of simplified battery housings that can be incorporated into the battery system of FIG. 3 according to some embodiments of the present invention;
FIG. 7 is a simplified cross section of an electronic device that can be used with battery system of FIG. 3 according to some embodiments of the present invention.
FIGS. 8A and 8B are simplified cross sections of a portion of an electronic device illustrating the differences between the pouch battery of FIG. 1 and the battery system of FIG. 3 according to some embodiments of the present invention.

### DETAILED DESCRIPTION

Lithium-polymer batteries are commonly used as rechargeable batteries to provide power to electronic devices. Some of these batteries can include rolled or stacked electrodes and electrolyte solution sealed in an aluminized laminated pouch. The seal can include a wide section of material that needs to be folded next to the pouch. The pouch can have a positive voltage that can cause corrosion in electronic components if the pouch contacts the electronic components. To accommodate the pouch sealing material and isolate the conductive surface of the pouch battery, the battery needs to be smaller than the designated battery area provided in the electronic device, resulting in wasted space and a shorter battery life for the electronic device.

Some embodiments of the invention provide a solution to this problem by having a battery with an electrode surrounded by a rigid or semi rigid housing that can be in close proximity to electronic components without interfering or damaging the electronic components. For example, in some embodiments the electrode is surrounded by a metal housing hermetically sealed around the electrode at a flange. The metal housing can be coupled between the ground terminal of the electrode and common ground. The flange reduces the amount of excess material that needs to be fit into the space designated for the battery and the grounded metal housing can contact the electronic components without damaging them. This allows the battery to be increased in size, reducing wasted space and allowing for the electronic device to have a longer battery life without increasing the size of the electronic device.

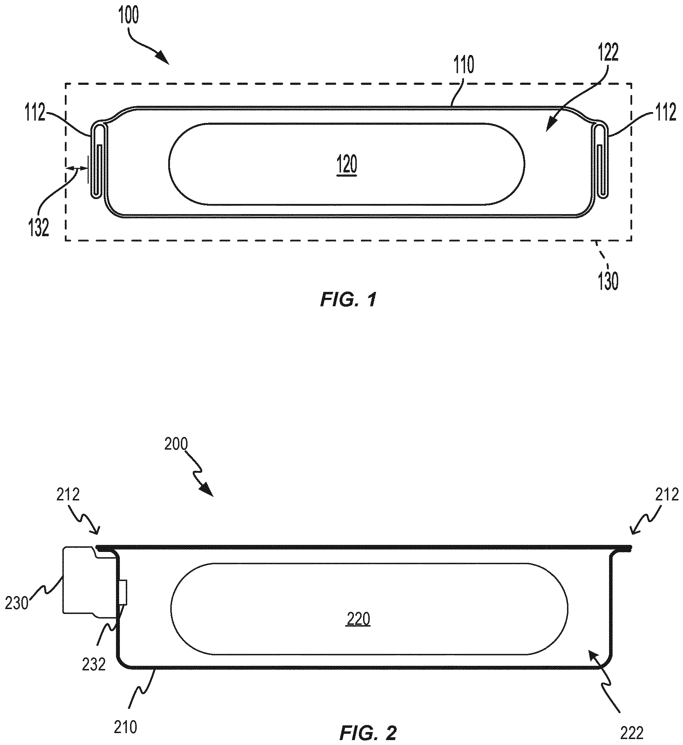

These and other embodiments are discussed below with references to FIGS. 1-7; however, those skilled in the art will readily appreciate that the detailed description given herein with respect to these figures is for explanatory purposes only and should not be construed as limiting.

FIG. 1 is a simplified illustration of a previously known pouch battery 100. The pouch battery 100 includes a pouch 110 surrounding electrodes 120 (e.g., rolled electrodes) and electrolyte 122. The pouch 110 includes a seal section 112 around the perimeter that seals the electrodes 120 and the electrolyte 122 inside the pouch 110. The seal section 112 leaves excess pouch material that is folded or compressed. The pouch 110 can have a positive electric charge causing galvanic corrosion in electronic components that contact the pouch 110.

To avoid the pouch 110 contacting other components, an effective battery area 130, which represents the space inside an electronic device required for the battery to be incorporated into that device, is defined around the pouch battery 100. The effective battery area 130 includes the pouch battery 100 and the contact gap 132 needed to separate the pouch 110 from the other electronic components and allow the pouch 110 to expand in response to gases generated by the electrodes 120 reacting with the electrolyte 122. The contact gap 132 is empty space in the electronic device and limits the size of the pouch battery 100. Limiting the size of the pouch battery 100 also limits the amount of electrical energy that can be used by the electronic device.

FIG. 2 is a simplified illustration of a battery 200 according to some embodiments of the present invention. The battery 200 includes a housing 210 forming a cavity for receiving rolled electrodes 220 and electrolyte 222. In contrast to the pouch battery 100 shown in figure 1, the housing 210 of the battery 200 does not include a large sealing section with excess material similar to seal section 112. Instead, the housing 210 includes two or more components made of rigid or semi-rigid material and includes a flange 212 around a perimeter of the components to hermetically seal them together and form the housing 210. The housing 210 can be made from a metal or other electrically conductive material and connected to a ground terminal of the electrode, allowing the housing 210 to come into contact with electronic components without causing corrosion or other electrical damage. Since the battery 200 does not have a large sealing section with excess material and can contact components without causing damage, the size of the battery 200 can be increased while still being able to fit in the same designated battery area or the size of the designated battery area can be reduced to accommodate other components in the electronic device or to shrink the size of the electronic device. In some embodiments, the housing 210 can be used as a structural element in the electronic device. For example, the housing 210 can be used as an attachment point for a bracket or a component in the electronic device.

Electrolyte 222 can be added to the interior of housing 210 to react with the rolled electrodes 220. Electrolyte can include liquid with one or more salt compounds that have been dissolved in one or more solvents. The salt compounds can include lithium-containing salt compounds in embodiments, and can include one or more lithium salts including, for example, lithium compounds incorporating one or more halogen elements such as fluorine or chlorine, as well as other non-metal elements such as phosphorus, and semimetal elements including boron, for example. In some embodiments, the salts can include any lithium-containing material that may be soluble in organic solvents. The solvents included with the lithium-containing salt can be organic solvents, and can include one or more carbonates. For example, the solvents can include one or more carbonates including propylene carbonate, ethylene carbonate, ethyl methyl carbonate, dimethyl carbonate, diethyl carbonate, and fluoroethylene carbonate. Combinations of solvents can be included, and can include for example, propylene carbonate and ethyl methyl carbonate as an exemplary combination. Any other solvent can be included that enables dissolving the lithium-containing salt or salts as well as other electrolyte component, for example, or can provide useful ionic conductivities, such as greater than or about 5-10 mS/cm.

In some embodiments, a connection module 230 can electrically couple the rolled electrodes 220 with electronic components within an electronic device that the battery 200 is installed. The connection module 230 can be mounted to the exterior of the housing 210 and include a terminal 232 that can extend through the housing. The terminal 232 can provide a connection point for the rolled electrodes 220 and can be electrically coupled with the rolled electrodes 220 and the connection module 230.

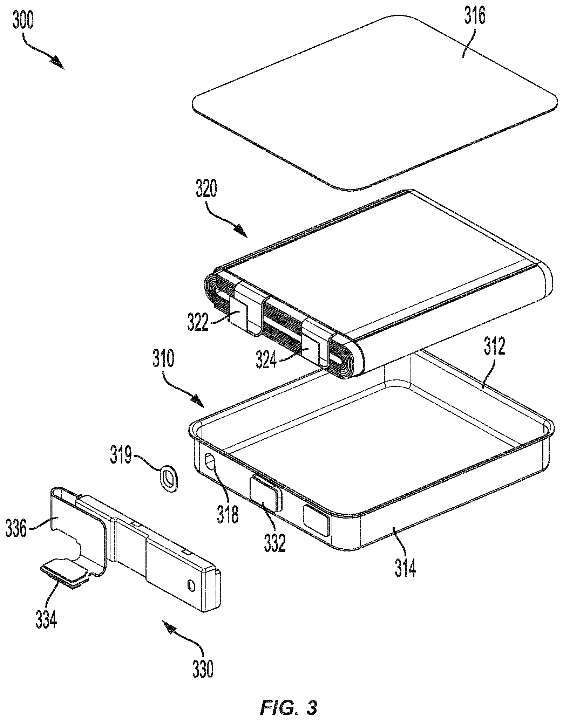

FIG. 3 is an illustration of an exploded view of a battery 300 including a housing 310, rolled electrodes 320, and a connection module 330 according to some embodiments of the present invention. The battery 300 and its associated components can be representative of the battery 200 shown in FIG. 2.

The housing 310 can include a formed base 314 and a lid 316 connected around the perimeter at flange 312 to form a sealed cavity for receiving rolled electrodes 320. Base 314 can be a shallow tub-shape with a flat bottom extending into sidewalls and generally square-corners. The square-corners and shallow tub-shape can allow for thinner sidewalls than alternative designs (e.g., a tube shape). In some embodiments, base 314 and lid 316 can be made of annealed stainless steel. For example, base 314 or lid 316 can be made of SUS 316L stainless steel with a thickness of 0.075mm. Base 314 and lid 316 can be attached at flange 312 around the perimeter of housing 310. Once attached, flange 312 can seal the housing 310 around an interior cavity. The flange 312 can form a hermetic seal around the cavity that can prevent electrolyte, moisture, and gases from leaking out of the cavity. Attachment of base 314 and lid 316 at flange 312 can include welding, crimping, adhesives or a combination of attachment methods.

In some embodiments, housing 310 includes one or more openings 318. Opening 318 can be used, for example, to fill the interior of the housing 310 with electrolyte. Opening 318 can additionally or alternatively be used for connecting connection module 330 to rolled electrodes 320 or for attachment points. Cap 319 can be used to cover and seal opening 318. For example, the cap 319 can seal opening 318 after the electrolyte has been added to the interior of the housing 310. Cap 319 can be attached to housing 310 to form a hermetic seal that can prevent gases or electrolyte from escaping from the housing 310.

The rolled electrodes 320 can provide electrical energy via chemical reaction with the electrolyte. As discussed further below, the rolled electrodes 320 can include one or more anode layers, one or more cathode layers, and a separation layer between the anode and cathode layers. As discussed further above, electrolyte (not shown for ease of illustration) can be added to the interior of housing to react with the rolled electrodes 320. The reaction between the electrolyte and the rolled electrodes 320 can create electrical energy that can be transmitted to the electronic device. The electrolyte can be retained in the interior of the housing 310 by the sealed flange 312. The flange 312 can form a hermetic seal around the rolled electrodes 320 and the electrolyte that can prevent the electrolyte and gases inside the housing 310 from leaking out of the housing.

In some embodiments, the rolled electrodes 320 can include one or more connectors (e.g., positive connector 322 and negative connector 324). The connectors can include a positive connector 322 and a negative connector 324. The positive connector 322 and/or the negative connector 324 can align with corresponding connection points on the housing or connect directly to the housing when the rolled electrodes 320 are installed in the battery 300. For example, the positive connector 322 can align and couple with a connection bar mounted to the interior of the housing 310 and negative connector 324 can couple with the housing 310. The positive connector 322 can be coupled with connection module 330. In some embodiments, the positive connector 322 can be coupled with the connection module 330 via a connection bar, as discussed further below. The negative connector 324 can be coupled with housing 310 to electrically connect the rolled electrodes 320 with the housing 310. The negative connector 324 and the housing 310 can be electrically connected to form a common ground. In some embodiments, the negative connector 324 is coupled with the housing 310 via a connection tab.

Connection module 330 can be electrically connected with rolled electrodes 320 and provide a variety of functionality. For example, connection module 330 can provide a connection that can provide access to the battery capacity to electronic components. In some embodiments, the connection module 330 can monitor the battery 300 during charging and discharging operations or monitor overall health of the battery 300. In some embodiments, the connection module 330 can include an application-specific integrated circuit (ASIC), a microcontroller, a circuit board, and/or other circuit elements to perform the desired battery monitoring functions. Various sensors for monitoring the rolled electrodes 320 or other aspects of the battery 300 can be coupled with a processor or other microcontroller within the electronic device and the connection module 330 for receiving power from the battery 300.

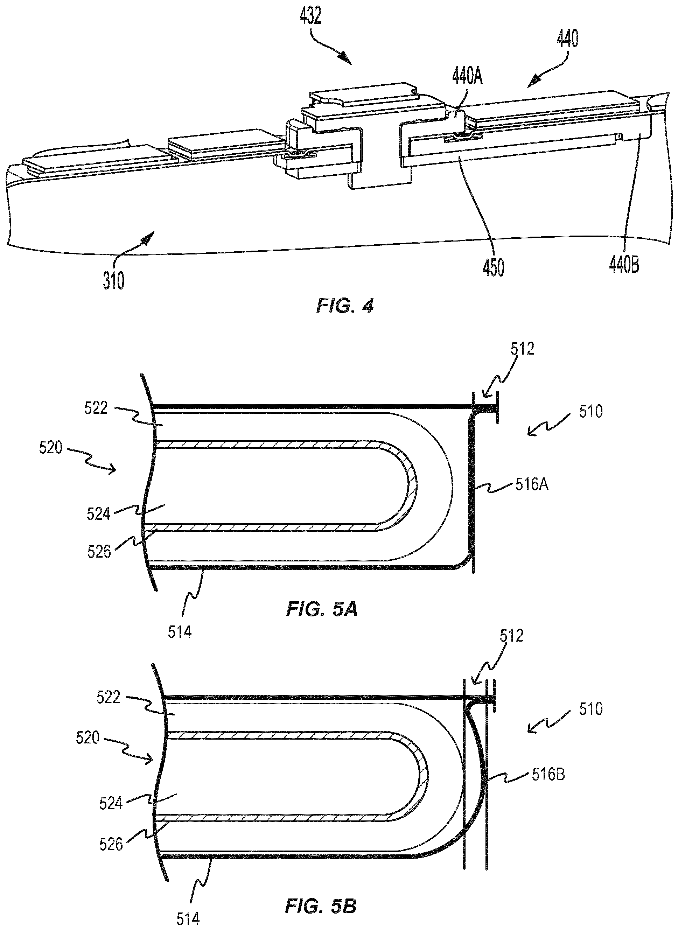

A connection terminal 332 can extend through housing 310 and provide a connection point for connection module 330. The connection terminal 332 can electrically couple the connection module 330 with the rolled electrodes 320. The components of the connection terminal 332 are shown and discussed in more detail in conjunction with FIG. 4 below.

A connector 334 can extending from connection module 330 to electrically couple the battery 300 with electronic components. For example, connector 334 can electrically couple with electronic components to allow the electronic components to access the battery capacity through connection module 330. In some embodiments the connector 334 can be or include a board-to-board connector.

In some embodiments, the connector 334 can be coupled with a coupling 336 which can flexibly extend from the connection module 330. For example, connector 334 can be at or near a distal end of the coupling 336. The coupling 336 can allow for electronic components in the electronic device to access the battery capacity through the connection module 330. The coupling 336 can include flexible components that allow the coupling to bend and fold in multiple ways to properly position the connector 334 during installation of the battery 300 in the electronic device. In some embodiments, the coupling 336 can be or include a printed circuit board, flex board, or other circuit materials or cables that can allow electrical transmission as well as communication transmission to and from the connection module 330 or the battery 300 to electronic components in the electronic device.

FIG. 4 is a cross-sectional, partial top view of housing 310 and a connection terminal 432 that can be incorporated into the battery 300 of FIG. 3 according to some embodiments of the present invention. Connection terminal 432 can extend through housing 310 and be made of or include electrically conductive material. Connection terminal 432 can electrically couple the connection module to the rolled electrodes. Connection terminal 432 can transmit an electrical signal from the rolled electrodes to the connection module 330. Spacers 440 can be placed on each side of housing 310 and extend circumferentially around connection terminal 432 through the housing 310. For example, a first spacer 440A can be positioned between the connection terminal 432 and the exterior of the housing 310 and a second spacer 440B can be positioned on the interior of the housing 310. Spacers 440 can be or include non-conductive material for electrically isolating connection terminal 432 from housing 310. For example, spacers 440 can be plastic, PerFluoroAlkoxy, or Polyfluoroethylenepropylene.

In some embodiments, connection terminal 432 can include connection bar 450 for electrically coupling connection terminal 432 to the rolled electrodes. The connection bar 450 can be positioned in the interior of and electrically isolated from housing 310. In some embodiments, connection bar 450 can couple with a positive connector extending from the rolled electrodes. The positive connector can align and connect with the connection bar 450 when the rolled electrodes are placed in the housing 310. Connection bar 450 can extend along a portion of the interior of the housing to provide an extended contact area for electrically coupling with the positive connector 322. The positive connector 322 can be electrically coupled to the connection bar 450 when the battery 300 is placed into the cavity. The connection bar 450 and the positive connector 322 can be electrically coupled without needing precise alignment between the positive connector 322 and the connection bar 450. Connection bar 450 can be or include electrically conductive material, for example, metal.

FIGS. 5A and 5B are cross sections of housing 510 and rolled electrodes 520 that can be incorporated into the battery 300 of FIG. 3 according to some embodiments of the present invention. Housing 510 can include base 514 extending into sidewall 516. Rolled electrodes 520 can be positioned within housing 510 that can be sealed via flange 512. The rolled electrodes 520 can include one or more anode layers 522, one or more cathode layers 524, and a separation layer 526. The anode layer 522 and cathode layer 524 can be stacked and rolled into a design (e.g., a jelly roll, folded, prismatic, or any design incorporating multiple layers). In some embodiments, one or both of the anode layer 522 and cathode layer 524 can include a metal or a non-metal material, for example, a polymer or composite that can include conductive material. The anode layer 522 can be or include copper, stainless steel, or any other suitable metal, as well as non-metal material including a polymer. For example, the anode layer 522 can be silicon, graphite, carbon, a tin alloy, lithium metal, a lithium-containing material, such as lithium titanium oxide (LTO), or other suitable materials that can form an anode layer 522 in a battery cell. The cathode layer 524 can be or include aluminum, stainless steel, or other suitable metals, as well as a non-metal material including a polymer. For example, the cathode layer 524 can be lithium metal oxide, such as lithium cobalt oxide, lithium manganese oxide, lithium nickel manganese cobalt oxide, lithium nickel cobalt aluminum oxide, lithium titanate, lithium iron phosphate, or other suitable materials that can form a cathode layer 524 in a battery cell. The separation layer 526 can be a polymer film or a material that may allow lithium ions to pass through the structure while not otherwise conducting electricity.

FIG. 5A shows housing 510 with a relatively vertical sidewall 516A extending from base 514. Flange 512 extends beyond sidewall 516A allowing other components to be positioned against sidewall 516A beneath flange 512. For example, an electronic component with the same width as flange 512 can be positioned against sidewall 516A without increasing the profile of battery 300.

FIG. 5B shows housing 510 with a curved sidewall 516B. The curved sidewall 516B can allow for an increased size of the curved end of rolled electrodes 520 without increasing the overall profile of battery 300. For example, curved sidewall 516B can be curved to allow for the apex of the curve to extend to the end of flange 512. The size of the rolled electrodes 520 can be increased to use the space made available by the curved sidewall 516B. By increasing the size of the rolled electrodes 520, the electrical potential of the battery 300 can be increased.

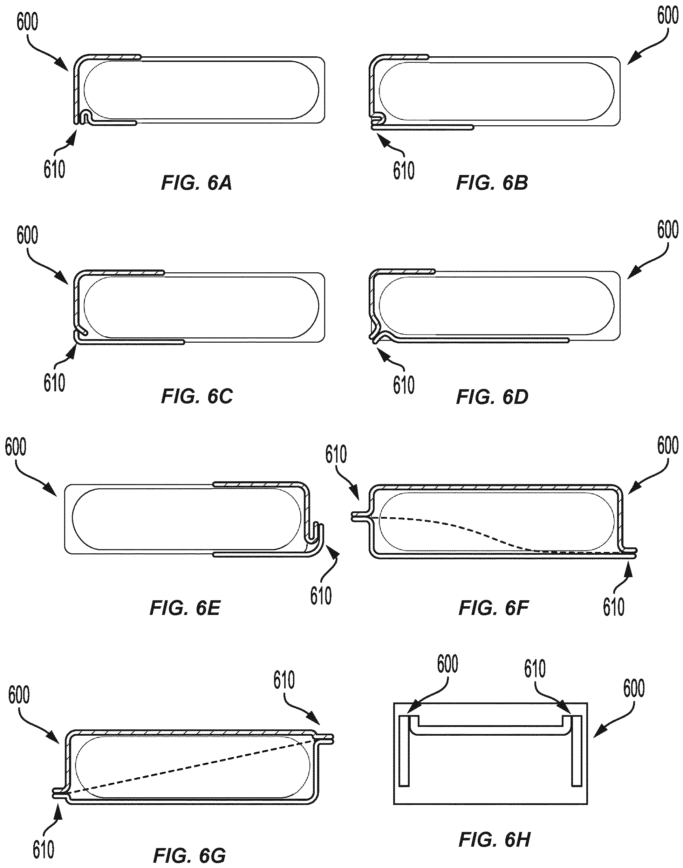

FIGS. 6A - 6H are side views of simplified housings 600 that can be incorporated into the battery 300 of FIG. 3 according to some embodiments of the present invention. FIGS. 6A through 6E include housing 600 with a single connection point 610. Housing 600 can be made from a single piece of material surrounding rolled electrodes. The single connection point 610 can connect the ends of the single piece of material to seal housing 600. In some embodiments, the connection point 610 can include additional bends to aid in sealing the housing 600. For example, the housing 600 can be overlapped or one end of the material can be folded to increase the area of connection point 610.

FIGS. 6F through 6H include housing 600 with two connections points 610. Housing 600 can be made from multiple pieces of material and sealed at the two connection points 610. For example, a top piece and a bottom piece can positioned around rolled electrodes and sealed at the two connection points 610. In some embodiments, the connection points 610 can be positioned to avoid components in the electronic device or can be used as support or mounting points for electronic components. FIG. 6H includes a housing 600 with a top and a bottom. The top can include curved edges that curve upwards and connect to the bottom at two connection points 610. The connection points 610 can be above the surface of the top of the housing 600 and can allow the top to swell upward without increasing the overall size of the battery 300.

The connection points 610 can form a hermetic seal around the battery. The hermetic seal can prevent gases and liquid from escaping from the interior of housing 600. The housing 600 and connection points 610 can prevent gases from escaping from the interior of the housing 600 and resist expansion caused by the gases being generated in the interior of the housing 600. The connection points 610 can include a crimped connection, a welded connection, an adhesive connection, or a combination thereof to form a hermetic seal.

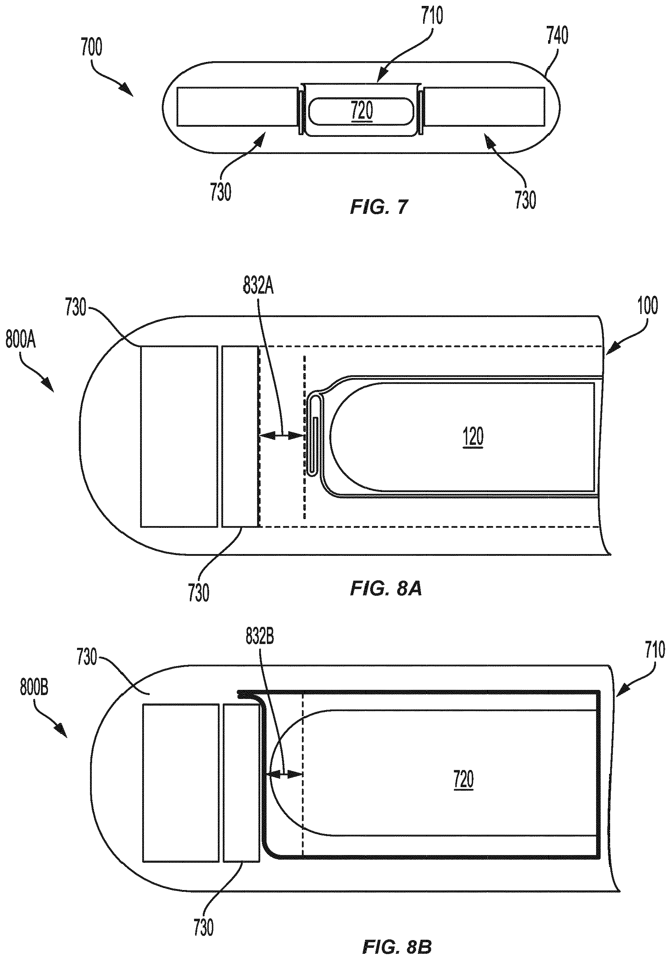

FIG. 7 is simplified cross sections of an electronic device 700 in which the battery system of FIG. 3 can be incorporated according to some embodiments of the present invention to provide power to electronic components of electronic device 700. Electronic device 700 can include battery 710 and components 730 contained in housing 740. As non-limiting examples, electronic device 700 can be or include a smartphone, a tablet computer, a wireless mouse, a wearable electronic device such as a watch, a laptop or other electronic device. Components 730 can include electronic and structure components for use with electronic device 700. For example, components 730 can include memory, a processor, a board with electrical contacts, or supports. Housing 740 can include one or more pieces that can be joined to protect the battery 710 and components 730. Housing 740 can reduce or prevent moisture or particles from reaching the components 730 or battery 710. In some embodiments, housing 740 can include a display for displaying data received from components 730. In some embodiments, the display and/or the housing can include a surface for receiving touch inputs from a user. Battery 710 can include some or all of the components, characteristics, or aspects of the battery 300 described above. Battery 710 can include rolled electrodes 720 that can be electrically coupled to provide electrical energy to components 730.

FIGS. 8A and 8B are simplified cross sections of a portion of an electronic device 800 illustrating the differences between pouch battery 100 and battery 710. FIG. 8A is a simplified cross section of a portion of an electronic device 800A including the previously known pouch battery 100 of FIG. 1. Pouch battery 100 includes electrodes 120 to provide electrical energy to components 730. Pouch battery 100 is offset from the components 730 by gap 832A. Gap 832A prevents the pouch battery 100 from contacting components 730, which can cause the components 730 to corrode. Gap 832A results in empty space in electronic device 800A and limits the size of the pouch battery 100. Limiting the size of the pouch battery 100 also limits the amount of electrical energy that can be used by the components 730 in the electronic device 800A.

FIG. 8B is a simplified cross section of a portion of an electronic device 800B including battery 710 of FIG. 7. Battery 710 includes rolled electrodes 720 to provide electrical energy to components 730. In contrast to pouch battery 100, battery 710 does not need to be separated from components 730. Battery 710 can contact components 730 without damaging components 730 or causing components 730 to corrode. Gap 832B is included as a reference to illustrate the space that is saved by using battery 710 with electronic device 800B. The space saved by using battery 710 in electronic device 800B can be used to increase the size of rolled electrodes 720. Increasing the size of rolled electrodes 720 increases the amount of electrical energy that can be used by components 730 in electronic device 800B.

The various aspects, embodiments, implementations or features of the described embodiments can be used separately or in any combination. Various aspects of the described embodiments can be implemented by software, hardware or a combination of hardware and software. The described embodiments can also be embodied as computer readable code on a computer readable medium for controlling manufacturing operations or as computer readable code on a computer readable medium for controlling a manufacturing line. The computer readable medium is any data storage device that can store data which can thereafter be read by a computer system. Examples of the computer readable medium include read-only memory, random-access memory, CD-ROMs, HDDs, DVDs, magnetic tape, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

### NUMBERED STATEMENTS OF INVENTION

1. A battery system for use in an electronic device comprising:
   an electrically conductive housing including a first portion having a flange around its periphery and a second portion that overlaps with the first portion and is hermetically sealed to the first portion at the flange, the first and second portions combining to define an interior cavity;
   an electrode assembly disposed within the interior cavity and including an anode, a cathode, and a separator between the anode and cathode; and
   a connection terminal electrically coupled to the electrode assembly through an opening in the housing.
2. The battery system of statement 1, wherein the housing and the electrode assembly are electrically coupled to a common ground.
3. The battery system of statement 1, the housing comprising:
   a first area;
   sidewalls extending from the first area and forming a cavity for receiving the electrode assembly, the sidewalls having curved edges opposite the first area; and
   a second area generally parallel to the first area and connectable with the curved edges of the sidewalls to form a flanged edge.
4. The battery system of statement 1, wherein the connection terminal comprises a connection bar for coupling with the electrode assembly when the electrode assembly is disposed in the cavity.
5. The battery system of statement 1 further comprising a connection module disposed on an exterior of the housing for coupling between the battery system and electronic components.
6. The battery system of statement 5, wherein the connection module monitors the battery during charging and discharging operations.
7. The battery system of statement 1, further comprising a flexible coupling comprising a board-to-board connector at a distal end of the flexible coupling, the flexible coupling extending from the connection terminal to electrically couple the electronic device and the electrode assembly.
8. A battery system comprising:
   an electrically conductive housing having a base portion and a lid that cooperate to define a hermetically sealed interior cavity, the base portion including a bottom wall and a sidewall extending upward and away from the bottom wall to form a flange around a periphery of the housing, wherein the lid overlaps with a portion of the sidewall to form the flange and the sidewall contains an opening for selectively hermetically sealing the housing;
   an electrode assembly disposed within the interior cavity and including a set of layers comprising one or more anode layers, one or more cathode layers, and a separation layer between each of the anode and cathode layers, wherein the electrode assembly is electronically coupled with the housing to form a common ground;
   electrolyte disposed within the housing around the electrode assembly;
   a connection terminal electrically coupled to the electrode assembly and extending through the opening in the sidewall of the housing; and
   an electrically insulative spacer extending circumferentially around the connection terminal to electrically isolate the connection terminal from the housing.
9. The battery system of statement 8 further comprising a connection bar disposed within the cavity and electrically coupled with the connection terminal, the connection bar coupleable with the electrode assembly when the electrode assembly is disposed within the cavity.
10. The battery system of statement 8, wherein the connection terminal monitors a charging of the set of layers, a discharging of the set of layers, or an operational condition of the set of layers.
11. The battery system of statement 8, wherein the lid and the sidewall are welded at the flange to form a hermetic seal.
12. A portable electronic device comprising:
   a display;
   a processor;
   a memory; and
   a battery system for providing power to the display, the processor, and the memory, the battery system comprising:
      an electrode assembly including an anode, a cathode, and a separator;
      a housing defining a hermetically sealed cavity enclosing the electrode assembly; and
      a connection module electrically coupling the electrode assembly to the display, the processor, and the memory, a portion of the connection module extending through a sidewall of the housing to electrically couple with the electrode assembly.
13. The portable electronic device of statement 12, wherein the portable electronic device is selected from a group consisting of a smartphone, a wireless mouse, and a watch.
14. The portable electronic device of statement 12, the housing is electrically coupled to the electrode assembly to form a common ground shared by the display, the processor, and the memory.
15. The portable electronic device of statement 12, the connection module comprising a connection bar disposed in the cavity for coupling with the electrode assembly when the electrode assembly is disposed within the cavity.
16. The portable electronic device of statement 12, the housing comprising an edge with a curved portion to form a flange for hermetic sealing of the housing.
17. The portable electronic device of statement 16, further comprising an electronic component with a portion of the electronic component positionable beneath the flange along the edge of the housing.
18. The portable electronic device of statement 12, the housing comprising:
   a first area;
   sidewalls extending from the first area and forming a cavity for receiving the electrode assembly, the sidewalls having curved edges opposite the first area; and
   a second area generally parallel to the first area and connectable with the curved edges of the sidewalls to form a flanged edge for hermetic sealing of the cavity.
19. The portable electronic device of statement 18, wherein the second area and the sidewalls are welded together to withstand an internal pressure increase in the cavity
20. The portable electronic device of statement 12, the battery system further comprising a terminal extending through the housing and electrically coupling the electrode assembly and the connection module.

## Claims

1. A battery system for use in an electronic device comprising:
an electrically conductive housing including a first portion having a flange around its periphery and a second portion that overlaps with the first portion and is hermetically sealed to the first portion at the flange, the first and second portions combining to define an interior cavity;
an electrode assembly disposed within the interior cavity and including an anode, a cathode, and a separator between the anode and cathode; and
a connection terminal electrically coupled to the electrode assembly through an opening in the housing.

2. The battery system of claim 1, the housing comprising:
a first area;
sidewalls extending from the first area and forming a cavity for receiving the electrode assembly, the sidewalls having curved edges opposite the first area; and
a second area generally parallel to the first area and connectable with the curved edges of the sidewalls to form a flanged edge.

3. The battery system of claims 1 or 2, wherein the connection terminal comprises a connection bar for coupling with the electrode assembly, the electrode assembly is disposed in the cavity, and the housing and the electrode assembly are electrically coupled to a common ground.

4. The battery system of any of claims 1 to 3, further comprising a connection module configured to monitor the battery during charging and discharging operations, the connection module disposed on an exterior of the housing for coupling between the battery system and electronic components.

5. The battery system of any of claims 1 to 4, further comprising a flexible coupling comprising a board-to-board connector at a distal end of the flexible coupling, the flexible coupling extending from the connection terminal to electrically couple the electronic device and the electrode assembly.

6. A battery system comprising:
an electrically conductive housing having a base portion and a lid that cooperate to define a hermetically sealed interior cavity, the base portion including a bottom wall and a sidewall extending upward and away from the bottom wall to form a flange around a periphery of the housing, wherein the lid overlaps with a portion of the sidewall to form the flange and the sidewall contains an opening for selectively hermetically sealing the housing;
an electrode assembly disposed within the interior cavity and including a set of layers comprising one or more anode layers, one or more cathode layers, and a separation layer between each of the anode and cathode layers, wherein the electrode assembly is electronically coupled with the housing to form a common ground;
electrolyte disposed within the housing around the electrode assembly;
a connection terminal electrically coupled to the electrode assembly and extending through the opening in the sidewall of the housing; and
an electrically insulative spacer extending circumferentially around the connection terminal to electrically isolate the connection terminal from the housing.

7. The battery system of claim 6, further comprising a connection bar disposed within the cavity and electrically coupled with the connection terminal, the connection bar coupleable with the electrode assembly when the electrode assembly is disposed within the cavity.

8. The battery system of claims 6 or 7, wherein the connection terminal monitors a charging of the set of layers, a discharging of the set of layers, or an operational condition of the set of layers.

9. The battery system of any of claims 6 to 8, wherein the lid and the sidewall are welded at the flange to form a hermetic seal.

10. A portable electronic device comprising:
a display;
a processor;
a memory; and
a battery system for providing power to the display, the processor, and the memory, the battery system comprising:
an electrode assembly including an anode, a cathode, and a separator;
a housing defining a hermetically sealed cavity enclosing the electrode assembly; and
a connection module electrically coupling the electrode assembly to the display, the processor, and the memory, a portion of the connection module extending through a sidewall of the housing to electrically couple with the electrode assembly.

11. The portable electronic device of claim 10, wherein the portable electronic device is selected from a group consisting of a smartphone, a wireless mouse, and a watch.

12. The portable electronic device of claims 10 or 11, the housing is electrically coupled to the electrode assembly to form a common ground shared by the display, the processor, and the memory.

13. The portable electronic device of any of claims 10 to 12, the connection module comprising a terminal extending through the housing and a connection bar disposed in the cavity for electrically coupling with the electrode assembly and the connection module when the electrode assembly is disposed within the cavity.

14. The portable electronic device of any of claims 10 to 13, wherein the housing comprises an edge with a curved portion to form a flange for hermetic sealing of the housing and a portion of the electronic component is positionable beneath the flange along the edge of the housing.

15. The portable electronic device of any of claims 10 to 14, the housing comprising:
a first area;
sidewalls extending from the first area and forming a cavity for receiving the electrode assembly, the sidewalls having curved edges opposite the first area; and
a second area generally parallel to the first area and connectable with the curved edges of the sidewalls to form a flanged edge for hermetic sealing of the cavity, wherein the second area and the sidewalls are welded together to withstand an internal pressure increase in the cavity.
